# EUROPEAN PATENT APPLICATION

(11) **EP 2 187 495 A2**
(43) Date of publication of application: **19.05.2010**
(21) Application number: 09175572.8
(22) Date of filing: 10.11.2009
(51) Int. Cl.: H02J 3/18

(54) **Resonance mitigation system and method**

(30) Priority: 14.11.2008 US 270885
(71) Applicant: General Electric Company, Schenectady, NY 12345 (US)
(72) Inventor: Sihler, Christof Martin, 85399 Hallbergmoos (DE); Larsen, Einar Vaughn, Ballston Lake, NY 12019 (US); Achilles, Alfredo Sebastian, 1900 Buenos Aires (AR)
(74) Representative: Illingworth-Law, William Illingworth

(57) **Abstract**

A system for reducing resonance from harmonic distortion in a high voltage power system is presented. The system includes a voltage damper coupled to the high voltage power system between a cable and an earth connection. The voltage damper is configured to clamp voltage peaks. The system includes a frequency shifter coupled across the voltage damper and configured to displace a resonance frequency of the high voltage power system.

## Description

### BACKGROUND

The invention relates generally to resonance in high voltage power systems and in particular, to a system and method for mitigating resonance from harmonic distortion.

Converting alternate current (AC) power to direct current (DC) power and vice versa may include circuits such as rectifier networks with passive input and output filters that produce significant harmonic distortion of the AC current waveforms. Harmonic distortion typically causes undesirable power dissipation and creates unwanted electromagnetic interference that couples into other lines and equipment. Distorted AC current waveforms may also excite undesirable vibration in transformers, rotating machinery where electromagnetic couplings are implemented. In addition, input power factor is often adversely affected resulting in decreased operating efficiency.

Other AC to DC power conversion approaches may involve active circuits utilizing various pulse width modulated (PWM) switching mode techniques. Such PWM techniques produce discrete circuit current pulses at the modulation frequency that require substantial filtering to limit harmonic distortion and electromagnetic interference. One such substantial filtering includes active filtering. Cancellation techniques are applied to PWM converter control systems in order to minimize harmonic distortion. However, such techniques are less effective for higher frequencies.

It will be appreciated that active filters employ a power system line level reference (sensed current or voltage at the load or source of the power system) for closed-loop control. A disadvantage of sensing current or voltage at the load or source of a power system includes devices for sensing that are exposed to the full-line voltage or current of the power system, whereby expensive, high power rated sensing devices are required.

Also, with active filters, logistical problems can arise with respect to the physical distance between or the location of the active filter's control device and the required sensing devices. Moreover, employing closed-loop control at the power system line will likely result in control instabilities when modifications are made to the power system itself. Another disadvantage of the aforementioned method is the problem of regulating current between multiple active filters, each sensing the same power system line. In such a configuration, each active filter will attempt to compensate for the other filter. Furthermore, active filtering has disadvantages of additional space requirement and increased costs.

Accordingly, there is a need for better harmonic mitigating techniques that include resonance mitigation.

### BRIEF DESCRIPTION

Briefly, a system for reducing resonance from harmonic distortion in a high voltage power system is presented. The system includes a voltage damper coupled to the high voltage power system between a cable sheath and an earth connection. The voltage damper is configured to clamp voltage peaks. The system also includes a frequency shifter coupled across the voltage damper and configured to displace a resonance frequency of the high voltage power system.

In one embodiment, a device for mitigating resonance is presented. The device includes a tunable voltage regulator configured to clamp resonant voltage peaks. The device also includes a frequency tuner coupled to the tunable voltage regulator and configured to shift a system frequency away from a resonance frequency.

In one embodiment, a harmonic resonance mitigating device is presented. The device includes a variable resistor configured to restrain voltage peaks resulting from a harmonic distortion. The device also includes a variable inductor coupled to the variable resistor and configured to shift a system resonance frequency. The device further includes a varistor coupled to the variable inductor and configured to arrest abnormal voltage spikes.

In one embodiment, a system for monitoring and mitigating resonance from harmonic distortion in a high voltage power system is proposed. The system includes a voltage damper coupled to the high voltage power system between non-voltage carrying portion of a cable and an earth connection, the voltage damper configured to clamp voltage peaks. The system includes a frequency shifter coupled across the voltage damper and configured to displace a resonance frequency of the high voltage power system. The system further includes a varistor coupled across the voltage damper and configured to clamp abnormal voltage spikes. The system further includes a monitoring device coupled to the voltage damper and configured to record a plurality of network parameters. An auto tunable circuit is coupled to the monitoring device and configured to tune the voltage arrested and the frequency shifter based upon the network parameters.

In one embodiment, a method for mitigating resonance from harmonic distortion in a high voltage power system is presented. The method includes introducing a complex impedance in an earth connection by clamping voltage peaks originating from resonance in harmonic distortion. The method also includes shifting a resonance frequency of the high voltage power system and arresting an abnormal voltage raise in the high voltage power system.

In another embodiment, a method for reducing resonance in an industrial electrical system is presented. The method includes dampening a resonant voltage peak from harmonic distortion, changing a system resonance frequency by introducing a tunable earth connector, and altering a harmonic profile of the industrial electrical system by introducing a complex impedance in an earth circuit.

In one embodiment, a system for reducing resonance in harmonic distortion is presented. The system includes a power system having a plurality of components interconnected via cables and configured to perform a pre-determined functions. The system further includes a tunable earth connector coupled to at least one respective non-voltage carrying portion of the cable and an earth connection in the power system. The tunable earth connector includes at least one variable resistor, at least one tunable inductor or tunable capacitor coupled across the variable resistor. The tunable earth connector is configured to reduce a resonance in harmonic distortion in the power system.

In one embodiment, a system for reducing resonance from harmonic distortion in a high voltage power system is presented. The system includes a voltage damper coupled to the high voltage power system between non-voltage carrying portion of a cable and an earth connection. The voltage damper is configured to clamp voltage peaks. The system further includes a frequency shifter coupled across the voltage damper and configured to displace a resonance frequency of the high voltage power system.

In one embodiment, a system for reducing resonance from harmonic distortion in a high voltage power system is presented. The system includes a resistor coupled to the high voltage power system between non-voltage carrying portion of a cable and an earth connection, the resistor configured to clamp voltage peaks.

In one embodiment, a system for reducing resonance from harmonic distortion in a high voltage power system is presented. The system includes an inductor coupled to the high voltage power system between a non-voltage carrying portion of a cable and an earth connection, the inductor configured to shift resonant peaks.

### DRAWINGS

These and other features, aspects, and advantages of the present invention will become better understood when the following detailed description is read with reference to the accompanying drawings in which like characters represent like parts throughout the drawings, wherein:

FIG. 1 illustrates a block diagram of a power system wherein an earth connector is implemented according to an aspect of the present technique;

FIG. 2 is a block diagram indicating various components of the earth connector as implemented in FIG. 1;

FIG. 3 is a block diagram illustrating various configurations of earth connection of FIG. 1;

FIG. 4 illustrates a cross sectional view of high voltage cable; and

FIG. 5 is a graph illustrating voltage spectrum of the power system in FIG. 1.

### DETAILED DESCRIPTION

Ideally, three-phase alternating current (AC) power, as is used in most industrial environments, employs three conductors of electrical power each providing a pure sine wave of current and voltage, the sine waves having equal and constant amplitude and frequency, and each phase separated from the others by 120 degrees of phase angle.

With the increased use of solid-state power electronic devices, having non-linear load characteristics, such as motor controllers having switched triacs that connect and disconnect large loads rapidly, the three-phase power at a given facility may become distorted. Such distortion is characterized by the introduction of harmonics into the fundamental frequency of the AC power. Harmonics cause loss of energy in motors and may effect the efficiency and stability of power supplies in sensitive electronic equipment. Harmonics may also cause resonance resulting in unwanted voltage spikes. For these reasons limitations on harmonic levels in AC power have been established in many countries.

The harmonic distortion in an AC power main may be reduced by the use of passive filters incorporating inductors and capacitors that have a series resonance or parallel resonance at the harmonic frequencies. Filters may also be configured to address resonance arising due to harmonics, by acting as damping circuits that modify resonance frequency or via a damping circuit that clamps resonant peaks. These passive filters are placed across the power mains to shunt the damaging harmonics. Such passive filters have a simple structure but a number of disadvantages. Passive filters are typically bulky and expensive; do not adapt to changes in harmonic frequencies caused by shifts in the fundamental AC frequency; and do not account for variations in the series impedance of the power mains. These disadvantages may be overcome by the use of active filters in which a power amplifier (such as a pulse width modulated (PWM) power supply) is connected directly to the power main to provide a countervailing harmonic current for canceling the distortion. Such active filters may be used with passive filters in a hybrid arrangement in which the PWM power supply is connected to the power mains through a series resonant circuit to block the AC fundamental and hence to decrease loading on the PWM power supply. However, active filters and hybrid filters have disadvantages such as requiring a unique design for a given system, and becoming less effective with a change in power system parameters. Furthermore, power losses occur with active filtering as active filters are always coupled to the power system whether filtering occurs or otherwise.

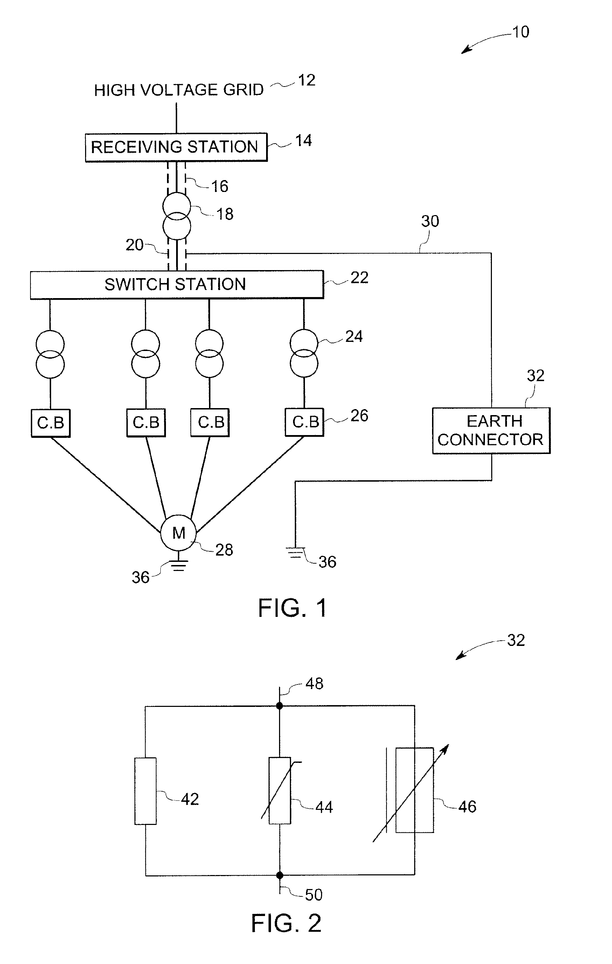

Turning now to FIG. 1, a high voltage three-phase power system 10 is illustrated. The power system 10 includes a receiving station 14 that receives power from high voltage grid 12, typically transmitted via long distance transmission lines (not shown). The power received in the form of high voltages via transmission lines are stepped down to lower voltages by a power transformer 18 coupled to the receiving station and a switching station 22 via high voltage cables 16 and 20. The switching station 22 further enables distribution of power via transformers 24. Circuit breakers 26 are coupled to the transformers 24 to control a flow of power downstream. Utilities such as motor 28 are coupled to the transformers 24 via circuit breakers. Motor 28 is illustrated herein for example. However, any utility that requires power may be coupled in the power system. An earth connector 32 is coupled between the high voltage cable sheath (via 30) and a ground 36 also referred to as earth connection. The working details and components of earth connector 32 are described in detail below.

Turning now to FIG. 2, a block diagram indicating various components of the earth connector 32 are illustrated. According to one embodiment, the earth connector 32 may include a tunable resistor 42, a varistor 44, and a tunable inductor 46 coupled in parallel. It may be noted that, the term "tunable" referenced herein is used synonymously with the term "variable." Further, tunable or variable elements in the embodiments may be fixed to a particular value after appropriate system design. As will be appreciated by one skilled in the art, tunable elements in the embodiments described herein may be replaced by fixed elements such as a resistor, an inductor, or a capacitor. Furthermore, the earth connector 32 includes connection 48 that may be coupled to a point in an earth circuit and connection 50 coupled to ground 36 as referenced in FIG. 1 of the power system. In one embodiment, tunable earth connector 32 may include parallel connection of the tunable/variable resistor 42 (designated as a damper configured to dampen resonance peaks), the tunable inductor 46 (designated as a frequency shifter configured to shift a resonance frequency), and the varistor 44 (designated as a voltage arrester/surge arrester to limit any abnormal voltage spikes across the earth connector). In one embodiment, the resistor 42 may be configured as a tunable voltage regulator configured to provide multiple resistance points to dampen voltage peaks arising from resonance. In another embodiment, the tunable inductor 46 may be configured to de-tune and/or shift a parallel resonance frequency. In an exemplary embodiment, a variable capacitor (frequency tuner) may be coupled to the earth connector 32 configured to change a harmonic resonance frequency. The varistor 44 or surge arrester may include, for example, a metal oxide varistor.

In one embodiment of the invention, the earth connector may include a resistor coupled between non-voltage carrying portion of a cable such as cable sheath or cable screen, and an earth or ground. The resistor is configured to clamp voltage peaks originating from the harmonics. In may be noted that a variable resistor to tune the resistance as required by the high voltage system design may replace the resistor. In another embodiment of the invention, the earth connector may include an inductor coupled between non-voltage carrying portion of a cable such as cable sheath or cable screen, and an earth or ground. The inductor is configured to shift the resonant peaks originating from the harmonics. In may be noted that a variable inductor to tune the inductance as required by the high voltage system design may replace the inductor. Such variable inductor may also shift resonance frequency of the high voltage system.

In an exemplary embodiment, a system for monitoring and mitigating resonance from harmonic distortion in a high voltage power system may be implemented along with the tunable earth connector as described in FIG. 2. The monitoring and mitigating system may include a variable resistor 42 (voltage arrestor) configured to clamp voltage peaks that may occur as a result of resonance from harmonic distortion. Furthermore, a tunable inductor and/or variable capacitor 46 (frequency shifter) may be coupled across the variable resistor 42 and configured to displace a resonance frequency of the high voltage power system 10 as referenced in FIG. 1. A protection device such as varistor 44 may be coupled across the variable resistor 42 and configured to clamp abnormal voltage spikes. A monitoring device (not shown) may be implemented that is coupled to the variable resistor and configured to record network parameters. Network parameters may include, for example, an inductor current flowing through the tunable inductor. An auto tunable circuit may be coupled to the monitoring device and configured to tune the variable resistor and the tunable inductor based upon the inductor current. For example, as the inductance is varied, there may exist a certain value wherein the current flowing in the inductor may be minimum, indicating that the effect of tuning causes shifting away from resonance frequency.

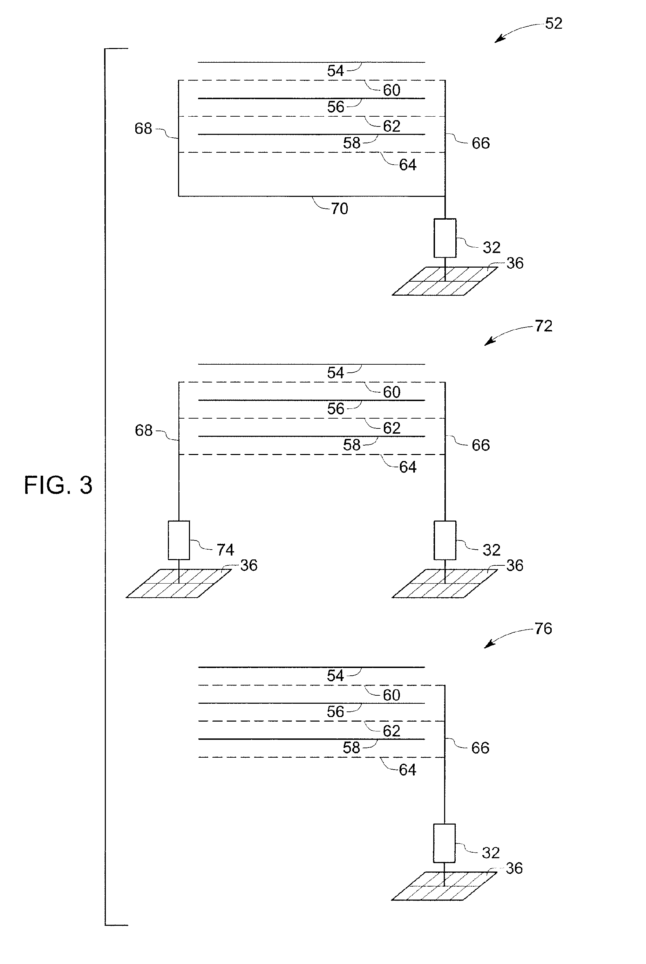

FIG. 3 illustrates various configurations of an earth connection that may be implemented to couple the earth connector between the high voltage cable sheath and earth/ground. In one embodiment, a double point bonding configuration may be implemented as illustrated by reference numeral 52. Three-phase high voltage cable comprises a plurality of cores 54, 56, and 58 that are surrounded by cable sheath/screens 60, 62, and 64, respectively. In the double point bonding configuration, the screens at 66 and 68 are coupled together via an earth conductor 70. The earth conductor 70 is further coupled to the ground 36 via the earth connector 32. In an exemplary embodiment, the earth connector 32 may be coupled between earth conductor 70 and screen 66 to cancel the common mode harmonics. In another embodiment, earth connection configuration such as double point bonding without earth conductor may be implemented as illustrated by reference numeral 72. The cable screens 60, 62, and 64 are coupled at 66 and 68 and connected to ground 36 separately via earth connectors 32 and 74. In another exemplary embodiment, a single point bonding as illustrated by reference numeral 76 may be implemented to connect the earth connector in the power system. The cable screens 60, 62, and 64 are coupled to the ground 36 via earth connector 32. In an exemplary embodiment, three earth connectors may be coupled individually between each phase screen and the ground, for example between 60 and 36. While only three exemplary configurations are depicted in FIG. 3, many such configurations are contemplated within the instant invention. Power systems having different configurations may implement one or more of such earth connection configurations to mitigate harmonic resonance.

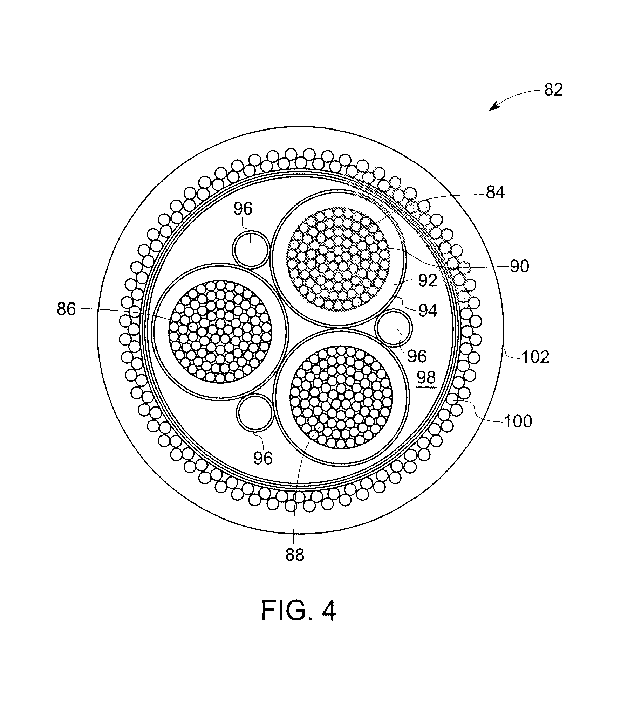

FIG. 4 illustrates a cross sectional view of high voltage cable 20 as referenced in power system of FIG. 1. Components of the high voltage cable as indicated by the reference numeral 82 include copper conductors 84, 86, 88 that are stranded and compacted often referred to as a core. A conductor screen 90 typically made of an extruded semi-conductive compound surrounds each core. An insulating layer 92 surrounds the conductor screen. A semi-conductive insulation screen 94 is disposed around the insulating layer 92. Similar arrangement of conductor screen 90, insulating layer 92, and semi-conductive insulation screen 94 are disposed around core 86 and 88. In one embodiment, the three cores 84, 86, and 88 along with the conductor screen 90, insulating layer 92, insulation shield 94 and earth conductors 96 are bound together by binder tape 99. In one embodiment, the space between the binder tape 99 and the core may include fillers 98 such as polypropylene strings. An armour 100 typically made of galvanized round steel wires is disposed around the fillers 98. Serving tapes 102 along with bituminous compound and/or polypropylene strings are provided as outermost protection for the cable. In a presently contemplated embodiment, the earth connector may be coupled to the earth conductors 96 and armour/sheath 100 and the ground 36 as referenced in FIG. 1. It may be noted that the earth connector is connected to a non-voltage carrying portion of the high voltage cable 20. While the armour/sheath is discussed, other such non-voltage carrying portions are contemplated by this invention.

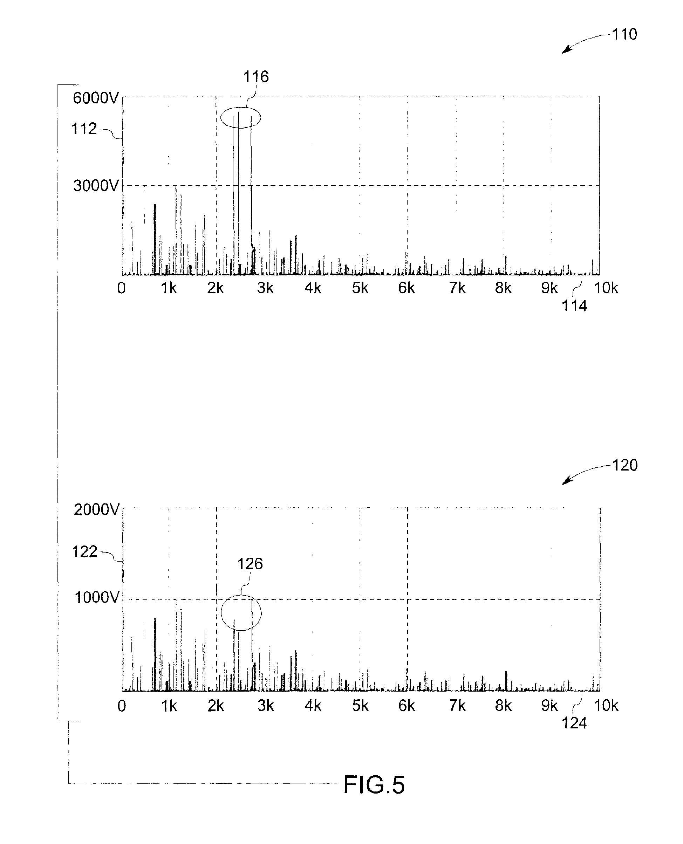

FIG. 5 is a graph illustrating voltage spectrum of a representative high voltage power system. Graph 110 represents a voltage spectrum in a 33kV grid with voltage amplitude on y-axis 112 and frequency (0 - 10 kHz) on x-axis 114. It may be noted that there are several voltage spikes 116 indicating resonance in the frequency range of about 2kHz to about 3 kHz. Graph 120 represents voltage spectrum in the 33kV grid with tunable earth connector 32 as implemented in FIG. 1 discussed above. The graph 120 indicates voltage amplitude on y-axis 122 and frequency (0 - 10 kHz) on x-axis 124. In may be noted that the voltage amplitude scale on the graph 120 is smaller compared to the voltage amplitude scale on graph 110. Furthermore, voltage spikes 126 are substantially lower (at least about six times lower in amplitude) in a frequency range of about 2kHz to about 3 kHz indicating tunable earth connector helps mitigate resonance.

Considering the voltage spectrum from graph 110 and 120, tunable earth connector may be implemented as a retrofit solution against an electrical resonance by tuning the resonant point (vary tunable inductor) to a location where no resonance occurs. In one embodiment, tuning may be implemented manually or by a simple control system that measures the inductor current and correspondingly changes the inductor value until the measured current reaches a minimum. In a varying voltage/harmonic spectrum such as in VSD motor cables, at variable switching frequency, a parallel resistor may be implemented in the earth connector 32 as referenced in FIG. 1 to introduce damping. It may be appreciated by one skilled in the art, that the illustrated voltage spectrum in FIG. 5 are part of exemplary embodiments. However, any power system that exhibits electrical resonance may implement the earth connector as a mitigating solution.

To alleviate disadvantages of active filters and hybrid filters, embodiments of the invention are cleverly articulated such that power losses are minimized in the mitigation system and tunable components implemented to add flexibility to incorporate change in power system parameters. Advantageously, such earth connector design can be applied to a wide range of applications, including applications where variable speed motors are connected. Such variable speed motors having variable electrical frequency, where several resonance points up to the lower frequency range may be mitigated. The tunable earth connector is best suited as a countermeasure against electrical resonance as cancellation techniques applied in the converter control system become less effective at higher frequency. The tunable earth connector provides a low voltage (low cost) device that can be used as a retrofit solution against electrical resonance caused in large drive applications (e. g. instead of applying active/hybrid filter circuit in the power system).
While only certain features of the invention have been illustrated and described herein, many modifications and changes will occur to those skilled in the art. It is, therefore, to be understood that the appended claims are intended to cover all such modifications and changes as fall within the true spirit of the invention.
Aspects of the present invention are defined in the following numbered clauses:
1. A system for reducing resonance from harmonic distortion in a high voltage power system, said system comprising:
   a voltage damper coupled to the high voltage power system between a cable sheath and an earth connection, the voltage damper configured to clamp voltage peaks; and
   a frequency shifter coupled across the voltage damper and configured to displace a resonance frequency of the high voltage power system.
2. The system of clause 1, further comprising a varistor coupled across the voltage damper and configured to clamp abnormal voltage spikes.
3. The system of clause 2, wherein the varistor comprises at least one of a metal oxide varistor or a non-linear resistor.
4. The system of any one of the previous clauses, wherein the voltage damper is further configured to dampen the resonance peaks from the harmonic distortion.
5. The system of any one of the previous clauses, wherein the frequency shifter comprises a de-tuner configured to shift a parallel resonance frequency.
6. The system of any one of the previous clauses, further configured to displace a resonance frequency of the high voltage power system.
7. A device for mitigating resonance, the device comprising:
   a tunable voltage regulator configured to clamp resonant voltage peaks; and
   a frequency tuner coupled to the tunable voltage regulator and configured to shift a system frequency away from a resonance frequency.
8. The device of clause 7, wherein the tunable voltage regulator comprises at least one of a variable resistor or a non-linear voltage dependent resistor.
9. The device of clause 7 or clause 8, wherein the frequency tuner comprises at least one of a resistor, a variable inductor, and a capacitor.
10. The device of any one of clauses 7 to 9, wherein the frequency tuner is configured to change a harmonic resonance frequency.
11. The device of any one of clauses 7 to 10, further comprising a surge arrester coupled to the frequency tuner and configured to clamp abnormal voltage spikes.
12. The device of clause 11, wherein the surge arrester comprises a metal oxide varistor.
13. A harmonic resonance mitigating device comprising:
   a variable resistor configured to restrain voltage peaks resulting from a harmonic distortion;
   a variable inductor coupled to the variable resistor and configured to shift a system resonance frequency; and
   a varistor coupled to the variable inductor and configured to arrest abnormal voltage spikes.
14. A system for monitoring and mitigating resonance from harmonic distortion in a high voltage power system, said system comprising:
   a voltage damper coupled to the high voltage power system between non-voltage carrying portion of a cable and an earth connection, the voltage damper configured to clamp voltage peaks;
   a frequency shifter coupled across the voltage damper and configured to displace a resonance frequency of the high voltage power system;
   a varistor coupled across the voltage damper and configured to clamp abnormal voltage spikes;
   a monitoring device coupled to the voltage damper and configured to record a plurality of network parameters; and
   an auto tunable circuit coupled to the monitoring device and configured to tune the voltage arrested and the frequency shifter based upon the network parameters.
15. A method for mitigating resonance from harmonic distortion in a high voltage power system, the method comprising:
   introducing a complex impedance in an earth connection by clamping voltage peaks originating from resonance in harmonic distortion and shifting a resonance frequency of the high voltage power system and arresting an abnormal voltage raise in the high voltage power system.
16. The method of any one of the previous clauses, wherein introducing the complex impedance comprises introducing at least one of a variable resistor, a variable inductor and a variable capacitor.
17. The method of any one of the previous clauses, further comprising altering a harmonic resonance frequency.
18. The method of any one of the previous clauses, wherein said arresting further comprises reducing a rate of change of voltage or current.
19. A method for reducing resonance in an industrial electrical system, said method comprising:
   dampening a resonant voltage peak from harmonic distortion;
   changing a system resonance frequency by introducing a tunable earth connector; and
   altering a harmonic profile of the industrial electrical system by introducing a complex impedance in an earth circuit.
20. A system for reducing resonance in harmonic distortion comprising:
   a power system having a plurality of components interconnected via cables and configured to perform a pre-determined functions; and
   a tunable earth connector coupled to at least one respective non-voltage carrying portion of the cable and an earth connection in the power system, wherein the tunable earth connector comprises:
      at least one variable resistor;
      at least one tunable inductor or tunable capacitor coupled across the variable resistor,
      wherein the tunable earth connector is configured to reduce a resonance in harmonic distortion in the power system.
21. A system for reducing resonance from harmonic distortion in a high voltage power system, said system comprising:
   a voltage damper coupled to the high voltage power system between a non-voltage carrying portion of a cable and an earth connection, the voltage damper configured to clamp voltage peaks; and
   a frequency shifter coupled across the voltage damper and configured to displace a resonance frequency of the high voltage power system.
22. A system for reducing resonance from harmonic distortion in a high voltage power system, said system comprising:
   a resistor coupled to the high voltage power system between a non-voltage carrying portion of a cable and an earth connection, the resistor configured to clamp voltage peaks.
23. The system of clause 22, wherein the resistor comprises a variable resistor.
24. A system for reducing resonance from harmonic distortion in a high voltage power system, said system comprising:
   an inductor coupled to the high voltage power system between a non-voltage carrying portion of a cable and an earth connection, the inductor configured to shift resonant peaks.
25. The system of clause 24, wherein the inductor comprises a variable inductor.

## Claims

1. A system for reducing resonance from harmonic distortion in a high voltage power system (10), said system comprising:
a voltage damper (42) coupled to the high voltage power system between a cable sheath (60, 62, 64) and an earth connection (74), the voltage damper configured to clamp voltage peaks; and
a frequency shifter (46) coupled across the voltage damper and configured to displace a resonance frequency of the high voltage power system.

2. The system of claim 1 further comprising a varistor (44) coupled across the voltage damper and configured to clamp abnormal voltage spikes.

3. The system of claim 2, wherein the varistor (44) comprises at least one of a metal oxide varistor or a non-linear resistor.

4. The system of claim 1, wherein the voltage damper is further configured to dampen the resonance peaks from the harmonic distortion.

5. The system of claim 1, wherein the frequency shifter comprises a de-tuner configured to shift a parallel resonance frequency.

6. The system of claim 1 further configured to displace a resonance frequency of the high voltage power system.

7. A harmonic resonance mitigating device comprising:
a variable resistor (42) configured to restrain voltage peaks resulting from a harmonic distortion;
a variable inductor (46) coupled to the variable resistor and configured to shift a system resonance frequency; and
a varistor (44) coupled to the variable inductor and configured to arrest abnormal voltage spikes.

8. A system for monitoring and mitigating resonance from harmonic distortion in a high voltage power system, said system comprising:
a voltage damper (42) coupled to the high voltage power system between a cable and an earth connection, the voltage damper configured to clamp voltage peaks;
a frequency shifter (46) coupled across the voltage damper and configured to displace a resonance frequency of the high voltage power system;
a varistor (44) coupled across the voltage damper and configured to clamp abnormal voltage spikes;
a monitoring device coupled to the voltage damper and configured to record a plurality of network parameters;
an auto tunable circuit coupled to the monitoring device and configured to tune the voltage arrested and the frequency shifter based upon the network parameters.

9. A method for mitigating resonance from harmonic distortion in a high voltage power system, the method comprising:
introducing a complex impedance in an earth connection by clamping voltage peaks originating from resonance in harmonic distortion and shifting a resonance frequency of the high voltage power system and arresting an abnormal voltage raise in the high voltage power system.

10. The method of claim 9, wherein introducing the complex impedance comprises introducing at least one of a variable resistor, a variable inductor and a variable capacitor.

11. The method of claim 9 or claim 10, further comprising altering a harmonic resonance frequency.

12. The method of any one of claims 9 to 11, wherein said arresting further comprises reducing a rate of change of voltage or current.

13. A system for reducing resonance from harmonic distortion in a high voltage power system, said system comprising:
a voltage damper (42) coupled to the high voltage power system between non-voltage carrying portion of a cable and an earth connection, the voltage damper configured to clamp voltage peaks; and
a frequency shifter (46) coupled across the voltage damper and configured to displace a resonance frequency of the high voltage power system.
